# EUROPEAN PATENT APPLICATION

(11) **EP 4 841 917 A1**
(43) Date of publication of application: **18.11.2026**
(21) Application number: 24915918.7
(22) Date of filing: 09.01.2024
(51) Int. Cl.: H04J 1/02

(54) **FREQUENCY DIVISION MULTIPLEXING MODULE FOR QUANTUM BITS, AND QUANTUM CHIP**

(71) Applicant: Hefei National Laboratory, Hefei 230088 (CN); University of Science and Technology of China, Anhui 230026 (CN)
(72) Inventor: LI, Shaowei, Hefei, Anhui 230088 (CN); FAN, Daojin, Hefei, Anhui 230026 (CN); WU, Dachao, Hefei, Anhui 230026 (CN); GONG, Ming, Hefei, Anhui 230026 (CN); ZHU, Xiaobo, Hefei, Anhui 230026 (CN); PENG, Chengzhi, Hefei, Anhui 230026 (CN); PAN, Jianwei, Hefei, Anhui 230026 (CN)
(74) Representative: Patentanwälte Geyer, Fehners & Partner mbB
(86) International application number: PCT/CN2024/071266
(87) International publication number: WO 2025/147836

(57) **Abstract**

The present disclosure provides a frequency division multiplexing module for qubits and a quantum chip. The frequency division multiplexing module includes at least one control line to which a microwave pulse is input, where the microwave pulse includes a plurality of sub-pulses of different frequencies superimposed therein; a plurality of band-pass filters each connected to the control line, where different band-pass filters have different device parameters, and each band-pass filter allows a sub-pulse of only a single frequency to pass therethrough; and a plurality of quantum couplers each connected to a respective one of the band-pass filters, where different quantum couplers have different bandwidth parameters; the quantum coupler is configured to perform a logical operation on two qubits based on the sub-pulse output by the band-pass filter corresponding to the quantum coupler.

## Description

### TECHNICAL FIELD

The present disclosure relates to the field of quantum communication technology, and more particularly, to a frequency division multiplexing module for qubits (quantum bits) and a quantum chip.

### BACKGROUND

With the rapid development of quantum computer technology, precision control of quantum systems has become a focus in the development of quantum computing. A superconducting quantum chip implemented using superconducting qubits is currently one of the most effective physical platforms for quantum computing. Precision control of a large-scale superconducting quantum chip is a core technology and challenge for improving quantum control precision.

For a superconducting qubit processor having a large number of superconducting qubits, signal fan-out of control lines may become a bottleneck that limits further scaling of the number of qubits. Designing an appropriate quantum chip control scheme and a corresponding chip structure is an important approach to reducing the number of control lines while ensuring the control precision of each qubit.

### SUMMARY

In view of the above, embodiments of the present disclosure provide a frequency division multiplexing module for qubits and a quantum chip.

In an aspect of embodiments of the present disclosure, a frequency division multiplexing module for qubits is provided, including: at least one control line to which a microwave pulse is input, where the microwave pulse includes a plurality of sub-pulses of different frequencies superimposed therein; a plurality of band-pass filters each connected to the control line, where different band-pass filters have different device parameters, and each of the band-pass filters allows a sub-pulse of only a single frequency to pass therethrough; and a plurality of quantum couplers each connected to a respective one of the band-pass filters, where different quantum couplers have different bandwidth parameters; where the quantum coupler is configured to perform a logical operation on two qubits based on the sub-pulse output by the band-pass filter corresponding to the quantum coupler.

According to embodiments of the present disclosure, the quantum coupler is configured to, under the action of the sub-pulse output by the band-pass filter corresponding to the quantum coupler, activate an interaction between the two qubits associated with the quantum coupler to perform a CZ gate or a CNOT gate.

According to embodiments of the present disclosure, a number of the quantum couplers is determined according to an amplitude rejection ratio of the band-pass filters.

According to embodiments of the present disclosure, the band-pass filter includes a superconducting band-pass filter, and the superconducting band-pass filter includes any one of: a filter fabricated from superconducting resonators formed by coplanar waveguides, a filter based on slotline-mode resonators, or a filter based on lumped-element superconducting circuit resonators.

According to embodiments of the present disclosure, the filter fabricated from superconducting resonators formed by coplanar waveguides is generated by coupling a plurality of superconducting resonators of a same frequency through coplanar waveguides, and where the device parameters include a passband bandwidth, passband attenuation, and a shape factor.

According to embodiments of the present disclosure, a center frequency of the superconducting band-pass filter changes in response to a change in a length of the superconducting resonators; and a coupling strength between superconducting resonators changes in response to a change in a distance between the superconducting resonators.

According to embodiments of the present disclosure, the plurality of quantum couplers are connected in the form of an array to the control line through the band-pass filters.

In another aspect of embodiments of the present disclosure, a quantum chip is provided, including the frequency division multiplexing module described above.

According to embodiments of the present disclosure, a plurality of band-pass filters are provided on each control line such that a band-pass filter outputs a sub-pulse of only a single frequency to a quantum coupler, thereby enabling the quantum coupler to perform a quantum gate operation on two qubits under the action of the sub-pulse of that frequency. Accordingly, the number of control lines is reduced while fidelity of the quantum gates is ensured, thereby enabling an increase in the number of qubits of the quantum chip.

### BRIEF DESCRIPTION OF THE DRAWINGS

The above and other objectives, features, and advantages of the present disclosure will become more apparent from the following description of embodiments of the present disclosure with reference to the accompanying drawings, in which:
FIG. 1 schematically illustrates a circuit diagram of a frequency division multiplexing module according to embodiments of the present disclosure; and
FIG. 2 schematically illustrates a use diagram of a frequency division multiplexing module according to embodiments of the present disclosure.

### DETAILED DESCRIPTION OF EMBODIMENTS

Embodiments of the present disclosure will be described below with reference to the accompanying drawings. It should be understood, however, that these descriptions are merely illustrative and are not intended to limit the scope of the present disclosure. In the following detailed description, numerous specific details are set forth to facilitate a thorough understanding of embodiments of the present disclosure. It will be apparent, however, that one or more embodiments may be practiced without these specific details. In addition, descriptions of well-known structures and technologies are omitted below to avoid unnecessarily obscuring the concepts of the present disclosure.

The terminology used herein is merely for the purpose of describing specific embodiments and is not intended to limit the present disclosure. As used herein, the terms "include," "comprise," and the like indicate the presence of the stated features, steps, operations, and/or components, but do not preclude the presence or addition of one or more other features, steps, operations, or components.

Unless otherwise defined, all terms used herein (including technical and scientific terms) have the meanings commonly understood by those skilled in the art. It should be noted that the terms used herein should be construed as having meanings consistent with the context of this specification and should not be construed in an idealized or overly rigid manner.

When an expression such as "at least one of A, B, and C, etc." is used, the expression should generally be construed according to the meaning commonly understood by those skilled in the art (for example, "a system having at least one of A, B, and C" includes, but is not limited to, a system having A alone, a system having B alone, a system having C alone, a system having A and B, a system having A and C, a system having B and C, and/or a system having A, B, and C).

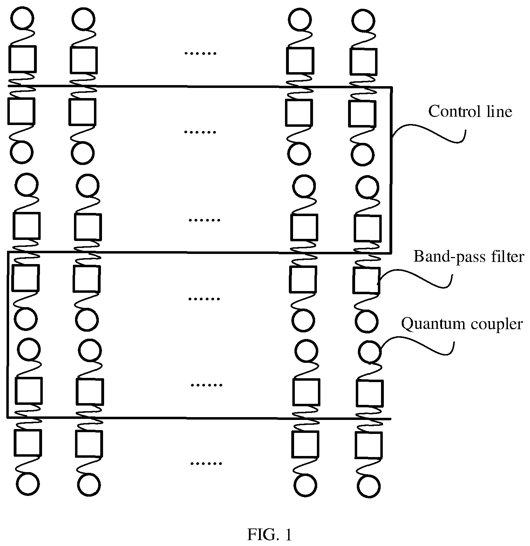

FIG. 1 schematically illustrates a circuit diagram of a frequency division multiplexing module according to embodiments of the present disclosure.

As shown in FIG. 1, a frequency division multiplexing module for qubits includes: at least one control line to which a microwave pulse is input, where the microwave pulse includes a plurality of sub-pulses of different frequencies superimposed therein; a plurality of band-pass filters each connected to the control line, where different band-pass filters have different device parameters, and each band-pass filter allows a sub-pulse of only a single frequency to pass therethrough; a plurality of quantum couplers each connected to a respective one of the band-pass filters, where different quantum couplers have different bandwidth parameters; where the quantum coupler is configured to process two qubits based on the sub-pulse output by the band-pass filter corresponding to the quantum coupler.

According to embodiments of the present disclosure, a frequency of the microwave pulse may be specifically set according to actual requirements. For example, the frequency may be selected from a frequency range of 50 MHz to 8 GHz, and a target frequency may specifically be selected within an available frequency interval of approximately 500 MHz. For example, different sub-pulses may be arranged at frequency spacing of 30 MHz.

According to embodiments of the present disclosure, after a microwave pulse is input into the control line, each band-pass filter allows a sub-pulse of only a single frequency to pass therethrough. For example, a first band-pass filter allows a sub-pulse of 100 MHz to pass therethrough, a second band-pass filter allows a sub-pulse of 200 MHz to pass therethrough, ..., and an n-th band-pass filter allows a sub-pulse of 100n MHz to pass therethrough.

According to embodiments of the present disclosure, upon receiving the sub-pulse of 100 MHz, the quantum coupler connected to the first band-pass filter processes two qubits corresponding to the quantum coupler based on the bandwidth parameter of the quantum coupler, thereby performing a quantum gate operation.

According to embodiments of the present disclosure, a plurality of band-pass filters are provided on each control line such that a band-pass filter outputs a sub-pulse of only a single frequency to a quantum coupler, thereby enabling the quantum coupler to perform a quantum gate operation on two qubits under the action of the sub-pulse of that frequency. Accordingly, the number of control lines is reduced while fidelity of the quantum gates is ensured, thereby enabling an increase in the number of qubits of the quantum chip.

According to embodiments of the present disclosure, under the action of the sub-pulse output by the band-pass filter corresponding to the quantum coupler, the quantum coupler activates an interaction between two qubits associated with the quantum coupler, thereby performing a CZ gate or a CNOT gate.

According to embodiments of the present disclosure, the CZ gate refers to a gate that performs a Z operation on a qubit when a control bit (i.e., the sub-pulse) is 1.

According to embodiments of the present disclosure, the CNOT gate refers to a gate that performs an X operation on a qubit when a control bit (i.e., the sub-pulse) is 1.

According to embodiments of the present disclosure, an AC operating frequency of each quantum coupler needs to be designed according to a qubit frequency method, and the passband frequency of the band-pass filter is specifically designed according to a drive frequency required by the corresponding quantum coupler. An input frequency bandwidth of each quantum coupler may be set to 5 MHz.

According to embodiments of the present disclosure, a number of the quantum couplers is determined according to an amplitude rejection ratio of the band-pass filters.

According to embodiments of the present disclosure, the band-pass filter includes a superconducting band-pass filter. The superconducting band-pass filter includes any one of: a filter fabricated from superconducting resonators formed by coplanar waveguides, a filter based on slotline-mode resonators, or a filter based on lumped-element superconducting circuit resonators.

According to embodiments of the present disclosure, the filter fabricated from superconducting resonators formed by coplanar waveguides is generated by coupling a plurality of superconducting resonators of a same frequency through coplanar waveguides. The device parameters include a passband bandwidth, passband attenuation, and a shape factor.

According to embodiments of the present disclosure, a center frequency of the superconducting band-pass filter changes in response to a change in a length of the superconducting resonator; a coupling strength between superconducting resonators changes in response to a change in a distance between the superconducting resonators.

According to embodiments of the present disclosure, when the center frequency and the coupling strength change, the passband bandwidth, passband attenuation, and shape factor may be changed.

According to embodiments of the present disclosure, the plurality of quantum couplers are connected in the form of an array to the control line through the band-pass filters.

In an embodiment, a superconducting AC CZ gate may be implemented using a microwave pulse in a frequency range of 50 MHz to 8 GHz. In consideration of potential frequency conflicts among AC CZ gates, for a given chip, the available frequencies are divided into selectable frequency intervals with a bandwidth of approximately 500 MHz to select target frequencies. By arranging the frequency intervals of different AC CZ gates at frequency spacing of 30 MHz, and ensuring that each filter achieves an amplitude rejection ratio of 30 dB at 15 dB point, errors caused by signal cross-interference between different AC CZ gates may be rendered negligible in experiments. Under such a control scheme, it is possible to achieve the goal of controlling m quantum couplers by a single control line and independently implementing CZ gates, thereby reducing the required number of control lines for the quantum couplers to 1/m of the original number.

In a specific embodiment, each control line is connected to and independently controls 15 quantum couplers to implement AC CZ gates, with almost no effect on the fidelity of the AC CZ gates. This may greatly reduce the number of control lines required by a superconducting quantum chip and reduce the number of control lines for the quantum couplers to 1/15 of the original number.

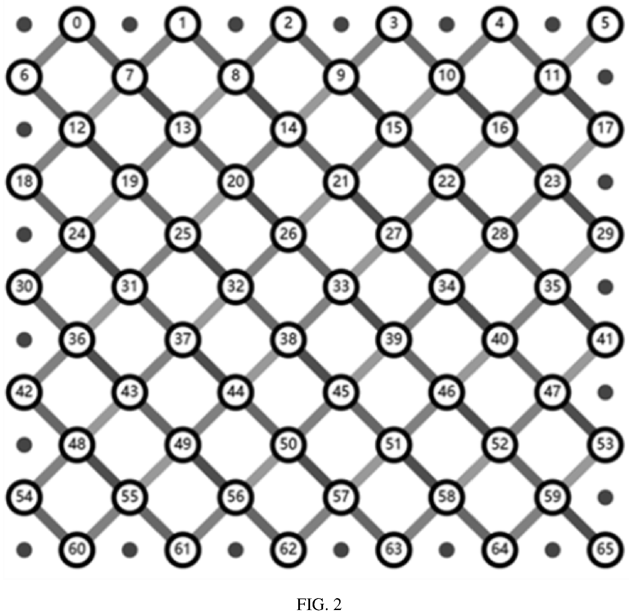

FIG. 2 schematically illustrates a use diagram of a frequency division multiplexing module according to embodiments of the present disclosure.

According to embodiments of the present disclosure, as shown in FIG. 2, a numbered element represents a qubit, and a horizontal bar represents a coupler connecting two qubits. For each quantum coupler, a specific frequency needs to be applied to activate an interaction between the two qubits connected thereto, thereby implementing a CZ gate. In a conventional control scheme, each quantum coupler requires a dedicated control line through which a microwave signal of a target frequency is input. In the present disclosure, N quantum couplers may be connected to a single control line through band-pass filters. During actual control, a microwave pulse of a frequency corresponding to a CZ gate to be performed may be input through the control line. A quantum coupler responds only to a microwave sub-pulse of a target frequency due to isolation provided by the band-pass filter corresponding to the quantum coupler.

In another aspect of embodiments of the present disclosure, a quantum chip is provided, including a plurality of frequency division multiplexing modules and other necessary functional modules to implement complete functionality of the quantum chip.

According to embodiments of the present disclosure, a plurality of band-pass filters are provided on each control line such that a band-pass filter outputs a sub-pulse of only a single frequency to a quantum coupler, thereby enabling the quantum coupler to perform a quantum gate operation on two qubits under the action of the sub-pulse of that frequency. Accordingly, the number of control lines is reduced while fidelity of the quantum gates is ensured, thereby enabling an increase in the number of qubits of the quantum chip.

The embodiments of the present disclosure have been described above. These embodiments are merely illustrative and are not intended to limit the scope of the present disclosure. Although the embodiments are described separately above, this does not mean that the measures described in the respective embodiments cannot be advantageously used in combination. The scope of the present disclosure is defined by the appended claims and their equivalents. Those skilled in the art may make various substitutions and modifications without departing from the scope of the present disclosure, and such substitutions and modifications are intended to fall within the scope of the present disclosure.

## Claims

1. A frequency division multiplexing module for qubits, comprising:
at least one control line to which a microwave pulse is input, wherein the microwave pulse comprises a plurality of sub-pulses of different frequencies superimposed therein;
a plurality of band-pass filters each connected to the control line, wherein different band-pass filters have different device parameters, and each of the band-pass filters allows a sub-pulse of only a single frequency to pass therethrough; and
a plurality of quantum couplers each connected to a respective one of the band-pass filters, wherein different quantum couplers have different bandwidth parameters;
wherein the quantum coupler is configured to perform a logical operation on two qubits based on the sub-pulse output by the band-pass filter corresponding to the quantum coupler.

2. The frequency division multiplexing module of claim 1, wherein the quantum coupler is configured to, under the action of the sub-pulse output by the band-pass filter corresponding to the quantum coupler, activate an interaction between the two qubits associated with the quantum coupler to perform a CZ gate or a CNOT gate.

3. The frequency division multiplexing module of claim 1, wherein a number of the quantum couplers is determined according to an amplitude rejection ratio of the band-pass filters.

4. The frequency division multiplexing module of claim 1, wherein the band-pass filter comprises a superconducting band-pass filter, and the superconducting band-pass filter comprises any one of: a filter fabricated from superconducting resonators formed by coplanar waveguides, a filter based on slotline-mode resonators, or a filter based on lumped-element superconducting circuit resonators.

5. The frequency division multiplexing module of claim 4, wherein the filter fabricated from superconducting resonators formed by coplanar waveguides is generated by coupling a plurality of superconducting resonators of a same frequency through coplanar waveguides, and wherein the device parameters comprise a passband bandwidth, passband attenuation, and a shape factor.

6. The frequency division multiplexing module of claim 4, wherein a center frequency of the superconducting band-pass filter changes in response to a change in a length of the superconducting resonators; and
a coupling strength between superconducting resonators changes in response to a change in a distance between the superconducting resonators.

7. The frequency division multiplexing module of claim 1, wherein the plurality of quantum couplers are connected in the form of an array to the control line through the band-pass filters.

8. A quantum chip, comprising:
the frequency division multiplexing module of any one of claims 1 to 7.
